# FASCICULE DE BREVET EUROPEEN

(11) **EP 0 922 521 B1**
(45) Date de publication et mention de la délivrance du brevet: **18.06.2003**
(21) Numéro de dépôt: 98403073.4
(22) Date de dépôt: 07.12.1998
(51) Int. Cl.: B23K 7/08

(54) **Procédé d'oxycoupage mettant en oeuvre de l'oxygène de haute pureté sous haute pression**
Verfahren zum Brennschneiden mit Hochrein- und Hochdrucksauerstoff
Oxycutting process using of a high purity and high presure oxygen

(30) Priorité: 11.12.1997 FR 9715704
(43) Date de publication de la demande: 16.06.1999
(73) Titulaire: L'air Liquide, S.A. à Directoire et Conseil de Surveillance pour l'Etude et l'Exploitation des Procédés Georges Claude, 75321 Paris Cedex 07 (FR)
(72) Inventeur: Suzon, Serge, 95300 Pontoise (FR); Cannet, Gilles, 95620 Parmain (FR); Charbonnel, Jean-Christophe, 95000 Cergy (FR)
(74) Mandataire: Pittis, Olivier

(56) Documents cités:
- EP-A- 0 188 763
- DE-A- 4 419 912
- US-A- 4 173 499

## Description

La présente invention se rapporte au domaine de l'oxycoupage et, plus particulièrement, à un procédé d'oxycoupage des aciers mettant en oeuvre de l'oxygène de haute pureté à haute pression.

L'oxycoupage est une technique de découpe des aciers, dans laquelle on opère simultanément un préchauffage à la flamme de la surface du métal à oxycouper, une combustion dudit métal par l'apport d'oxygène sous la ferme d'un jet de coupe et une évacuation des produits de cette combustion par le biais de l'énergie cinétique délivrée par ledit jet de coupe.

De nombreux travaux se sont attachés à améliorer les procédés d'oxycoupage existant en vu d'améliorer, notamment, la qualité des coupes et la vitesse d'exécution.

Ainsi, les caractéristiques cinétiques du jet de coupe ont été améliorées grâce au développement de buses de coupe munies de tuyères supersoniques fonctionnant à des pressions supérieures à 10⁶ Pa, voire même, dans certains cas, à des pressions pouvant atteindre 10⁷ Pa.

Cependant, si augmenter la pression conduit à une augmentation de la vitesse de coupe, sur le plan industriel, des procédés d'oxycoupage mettant en oeuvre des pressions supérieures à 10⁶ Pa posent de nombreux problèmes de mise en oeuvre pratique.

En outre, des études ont porté sur l'influence de la pureté de l'oxygène utilisé en oxycoupage sur la vitesse de coupe.

Ainsi, il a été observé que, pour de l'oxygène à une pureté de 99,8%, il était possible d'augmenter notablement la vitesse de coupe, mais que cette augmentation de vitesse induit une détérioration de la qualité des bords de la saignée, c'est-à-dire de la planéité de la surface oxycoupée.

Le but de la présente invention est donc de proposer un procédé d'oxycoupage permettant d'atteindre des vitesses de coupe supérieures à celles des procédés classiques, tout en obtenant une qualité de coupe correcte, en optimisant les quantités d'oxygène consommées et donc en réduisant les coûts du procédé.

La présente invention concerne alors un procédé de oxy-coupage des aciers selon la revendication 1, dans lequel on utilise en tant que gaz de coupe de l'oxygène contenant au plus 0,1 % d'impuretés à une pression d'au moins 1,5.10⁶ Pa.

Selon le cas, le procédé de l'invention peut comprendre l'une ou plusieurs des caractéristiques suivantes:
- la pression de l'oxygène est d'au moins 2.10⁶ Pa, de préférence comprise dans la plage 2,5.10⁶ à 5,5.10⁶ Pa environ;
- la pression de l'oxygène est d'environ 3,6.10⁶ Pa à 4,2.10⁶ Pa;
- la teneur en impuretés de l'oxygène est inférieure à 900 ppm, de préférence inférieure à 600 ppm, de préférence inférieure à 100 ppm;
- le débit d'oxygène est supérieur à 2 m³/h, de préférence compris entre 3 m³/h et 15 m³/h.

En pratique, on choisit le débit d'oxygène en fonction de l'épaisseur de la tôle à couper, par exemple un débit de l'ordre de 3,5 m³/h pour une épaisseur de tôle d'environ 25 mm ou un débit de l'ordre de 10 m³/h pour une épaisseur de 80 mm;
- la vitesse de coupe est d'au plus 750 mm/min⁻¹, de préférence, d'au plus 650 mm.min⁻¹.

En pratique, on choisit la vitesse de coupe en fonction de l'épaisseur de la tôle à couper.

L'invention concerne également, selon la revendication 7, un dispositif susceptible de mettre en oeuvre un procédé selon l'invention, lequel comprend un chalumeau muni d'une tuyère à profil convergent/divergent, permettant de fonctionner à vitesse supersonique, telle par exemple une tuyère de Laval, l'angle du divergent est compris entre 5° et 7° et l'angle du convergent est compris entre 45° et 60°.

Le chalumeau est muni d'une tuyère dont le calibre de l'orifice de sortie est compris entre 0,25 mm et 1,00 mm, de préférence de 0,40 mm à 0,90 mm.

L'invention va maintenant être décrite plus en détail à l'aide d'exemples donnés à titre illustratif, mais non limitatif.

La présente étude a été réalisée au moyen d'une installation comportant un chalumeau d'oxycoupage susceptible de délivrer de l'oxygène jusqu'à une pression de l'ordre de 8.10⁶ Pa. Le chalumeau est alimenté avec de l'oxygène sous-pression stocké dans des bouteilles.

Un détendeur de type HP 100 permet de détendre l'oxygène sous-pression de manière à alimenter la buse du chalumeau avec de l'oxygène à une pression comprise entre 2.10⁶ et 4.10⁶ Pa environ; la mesure de la pression se fait au moyen d'un manomètre à tube de Bourdon (classe 1) placé à l'entrée du chalumeau.

En outre, le débit d'oxygène est mesuré au moyen d'un débitmètre à flotteur de type classique à partir de la pression et du calibre de chaque buse moyennant un étalonnage préalable de ceux-ci.

A titre comparatif, on utilise, d'une part, de l'oxygène de haute pureté contenant moins de 0,1% d'impuretés et, d'autre part, de l'oxygène industriel basse pureté, c'est-à-dire de l'oxygène contenant environ 0,5% d'impuretés. L'oxygène haute pureté employé ici est l'oxygène commercialisé par la Société L'AIR LIQUIDE sous la référence LASAL 2003.

Les essais suivants ont été réalisés, à titre comparatif, pour différentes épaisseurs de tôle, à savoir 25, 50 et 80 mm.

Pour chaque éprouvette ou plaque d'acier testée, le contrôle de la qualité de coupe se fait suivant l'état de la surface de coupe et de sa planéité notamment par mesure de la largeur de la saignée. Les différentes mesures se font à l'aide d'un projecteur de profil.

Préalablement aux essais destinés à valider le procédé selon l'invention, il est nécessaire de déterminer le type de buse le plus adapté à une épaisseur de tôle et/ou à une vitesse de coupe donnée.

En effet, un débit d'oxygène trop important risque de conduire un excès d'oxygène dans la saignée, malgré l'augmentation de la vitesse d'avance, et de conduire ainsi à une augmentation de la largeur de saignée et du coût de l'opération. Il est donc nécessaire de choisir le calibre de buse le plus adapté à une épaisseur de tôle donnée. Pour cela, on fait varier le calibre de la buse pour une épaisseur de tôle donnée, à savoir 20 à 40 mm.

Les caractéristiques des buses testées sont données dans le tableau I et les résultats obtenus pour les 3 calibres testés et en fonction de la vitesse de coupe adoptée sont consignés dans le tableau II.

**TABLEAU I**

| CALIBRE (mm) | DIAMETRE AU COL (mm) | DIAMETRE DE SORTIE (mm) | DEBIT (m³/h) | PRESSION (Pa) |
|---|---|---|---|---|
| 1 | 1,04 | 1,99 | 13 | 2,7.10⁶ |
| 0,7 | 0,72 | 1,4 | 5 | 2,2.10⁶ |
| 0,6 | 0,56 | 1,04 | 3 | 2,3.10⁶ |

**TABLEAU II**

| CALIBRE DE BUSE (mm) | EPAISSEUR DE TÔLE (mm) | VITESSE DE COUPE (mm/min) | QUALITE DE COUPE | ESSAI N° |
|---|---|---|---|---|
| 1,0 | 40 | 600 | défaut de planéité, face oxydée, fumées rousses | 1 |
| 0,7 | 20 | 400 | face oxydée | 2 |
| | 20 | 600 | face oxydée | 3 |
| | 20 | 700 | défaut de planéité, face oxydée | 4 |
| | 20 | 800 | talon | 5 |
| | 40 | 400 | planéité 0,7 mm - face glacée | 6 |
| | 40 | 500 | planéité 0,3 mm - face faiblement oxydée | 7 |
| | 40 | 600 | planéité 0,8 mm - oxydes adhérents - talon | 8 |
| | 40 | 700 | planéité 1 mm - oxydes adhérents - talon | 9 |
| | 20 | 400 | planeité 0,15 mm - face oxydée | 10 |
| | 20 | 500 | planéité 0,3 mm - face oxydée | 11 |
| 0,6 | 20 | 600 | planéité 0,45 mm - face oxydée | 12 |
| | 20 | 700 | planéité 0,7 mm - face oxydée | 13 |
| | 20 | 800 | planéité 0,9 mm - face oxydée | 14 |

Il ressort des tableaux I et II que l'essai n° 1 qui met en oeuvre une buse de calibre 1 mm et une vitesse de coupe élevée conduit à une coupe s'accompagnant d'un fort dégagement de fumées rousses, d'une face de coupe oxydée et d'un défaut de planéité important. Ces défauts, en particulier les fumées rousses, prouve que le débit d'environ 13 m3/h est beaucoup trop élevé dans ce cas.

Pour améliorer la qualité de la coupe, le choix (essais n° 2 à 5) s'est porté vers un calibre de buse inférieur (0,7 mm) et une épaisseur de tôle plus faible (20 mm). La qualité de coupe obtenue est moyenne, présentant une face oxydée et un défaut de planéité, mais reste toutefois correcte pour une vitesse d'avance de l'ordre de 600 mm/min; la vitesse limite étant comprise entre 700 et 800 mm/min. Néanmoins, on remarque cue l'opération ne produit plus de fumées rousses, bien que le débit soit encore supérieur à la valeur minimum nécessaire (face oxydée).

La buse utilisée dans les essais 2 à 5 a ensuite été testée sur des tôles d'épaisseur supérieure, à savoir 40 mm (essais n° 6 à 9). Il ressort des résultats obtenus que la qualité de coupe est correcte, dans ce cas, pour une vitesse de coupe de 500 mm/min pour laquelle on obtient un défaut de planéité de 0,3 mm et un faciès de coupe faiblement oxydé; le débit étant de l'ordre de 5 m3/h. En outre, il est à noter que, pour cette épaisseur, la vitesse limite est apparemment comprise entre 600 et 700 mm.min⁻¹.

Dans les essais 10 à 14, un calibre de buse de 0,6 mm a été testé sur des tôles de 20 mm d'épaisseurs. Les résultats obtenus, en particulier l'obtention d'une face de coupe oxydée, mettent en évidence un excès d'oxygène. Cependant, le défaut de planéité est relativement faible et la vitesse limite est comprise entre 700 et 800 mm.min⁻¹.

Il est à noter que les essais 1 à 14 précédents ont été réalisés à partir d'oxygène de type LASAL 2003 et pour une pression de coupe de 2,2.10⁶ Pa à 2,7.10⁶ Pa environ.

A titre indicatif, les photographies 1 et 2 montrent la largeur de saignée cbtenue pour une tôle de 20 mm d'épaisseur avec de l'oxygène haute pureté:
- photographie 1: la vitesse de coupe est de 400 mm/min et la pression de l'oxygène de coupe est de 22.10⁵ Pa (à droite sur photo) ou, le cas échéant, de 7.10⁵ Pa (à gauche), c'est-à-dire à une pression standard;
- photographie 2: l'évolution de la largeur de la saignée pour des vitesses de coupe de 800, 700, 600 et 500 mm/min (de gauche à droite sur la photo) pour une pression de 22.10⁵ Pa environ.

A partir des résultats précédents, six buses (buses B1 à B6) différentes ont été sélectionnées et sont utilisées ci-après pour évaluer le procédé de coupage selon l'invention. Ces différentes buses possèdent les caractéristiques données dans le tableau III suivant et seront employées pour oxycouper des tôles de 25 à 80 mm d'épaisseur à des pressions de 25 à 40 bars environ.

**TABLEAU III**

| BUSE N° | CALIBRE D'ENTREE (mm) | CALIBRE DE SORTIE (mm) | EPAISSEUR DE TOLE (mm) | DEBIT REEL (m³/h) | PRESSION (Pa) |
|---|---|---|---|---|---|
| B1 | 0,42 | 0,91 | 25 | 3,6 | 4,1.10⁶ |
| B2 | 0,51 | 1,03 | 25 | 3,3 | 2,6.10⁶ |
| B3 | 0,51 | 1,15 | 50 | 4,6 | 3,6.10⁶ |
| B4 | 0,71 | 1,45 | 50 | 6,4 | 2,6.10⁶ |
| B5 | 0,72 | 1,60 | 80 | 10,6 | 4,0.10⁶ |
| B6 | 0,91 | 1,75 | 80 | 10 | 2,8.10⁶ |

### EXEMPLE 1:

### Essais d'oxycoupage avec de l'oxygène de haute pureté

Une première série d'essais a été réalisée avec de l'oxygène de haute pureté (ici de l'oxygène de type LASAL 2003) et a permis de déterminer l'état d'oxydation des surfaces de coupe, les vitesses limites de coupe (tableau IV) et la qualité de coupe pour différentes épaisseurs de tôle (25,50 et 80 mm), c'est-à-dire l'aspect des surfaces, la planéité et la largeur de saignée (tableaux v à x) pour les buses B1 à B6 ci-dessus, et à titre comparatif, pour une buse de type standard par exemple une buse de 7.10⁵ Pa.

Les résultats obtenus sont notamment illustrés par les photographies figurant en annexes.

### . Vitesses limites de coupe

Les vitesses limites de coupe obtenues pour les différentes buses sont données dans le tableau IV ci-après, en fonction de l'épaisseur de tôle, de la pression relative et du débit en oxygène.

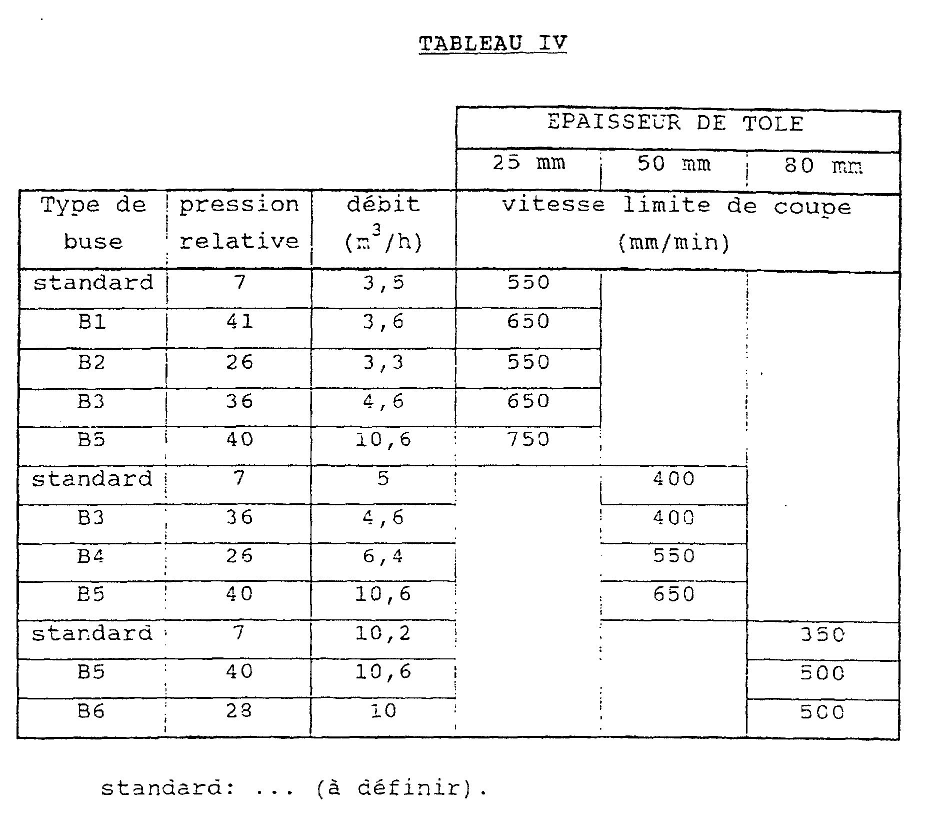

### . Etat d'oxydation

Il est à noter que, quelle que soit l'épaisseur de tôle (25,50 ou 80 mm), les surfaces obtenues ne sont pas oxydées si le débit d'oxygène de coupe est minimum.

### . Qualité de coupe

**TABLEAU V:**

| Aspect des surfaces | | | | |
|---|---|---|---|---|
| Epaisseur tôle | vitesse de coupe (mm/min) | buse standard (7.10⁵ Ra) | buse B2 (2,6.10⁶ Pa) | buse B1 (4.1.10⁶ Pa) |
| 25 mm | 400 | stries incurvées vers l'avant | stries droites et régulières | stries droites et régulières |
| | 500 | stries incurvées vers l'avant | stries inclinées | stries droites et régulières |
| | 600 | series déformation en partie inférieure | stries inclinées | stries inclinées |

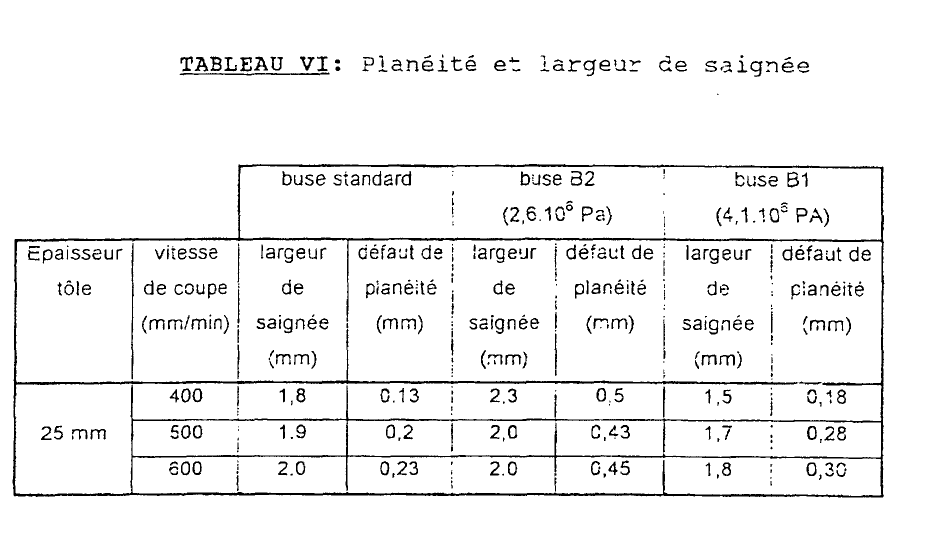

**TABLEAU VII:**

| Aspect des surfaces | | | | |
|---|---|---|---|---|
| Epaisseur tôle | vitesse de coupe (mm/min) | buse standard (7.10⁵ Pa) | buse B4 (2.6.10⁶ Pa) | buse B3 (3.6.10⁶ Pa) |
| 50 mm | 300 | stries droites et régulières | stries droites et régulières | stries droites et régulières |
| | 400 | stries droites et régulières | stries droites et régulières | stries droites et régulières |
| | 500 | stries incurvées vers l'arrière | shies droites et régulières | stries incurvées vers l'arrière |

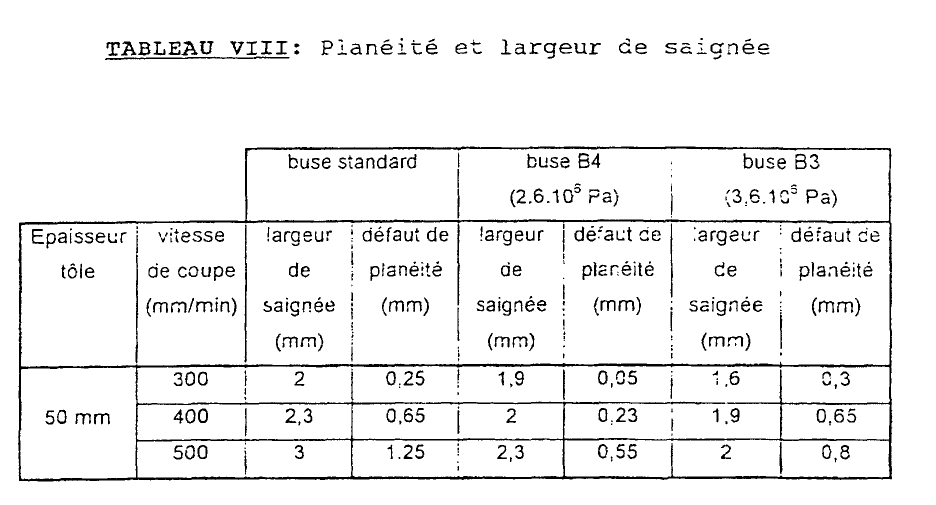

**TABLEAU IX:**

| Aspect des surfaces | | | | |
|---|---|---|---|---|
| Epaisseur tôie | vitesse de coupe (mm/min) | buse standard (7.10⁵ Pa) | buse B6 (2.8.10⁶ Pa) | buse B5 (3,6.10⁶ Pa) |
| 80 mm | 300 | stries déformées en partie inférieure | début de déformation en partie inférieure | stries droites et régulières |
| | 400 | stries incurvées et déformées en partie inférieure | stries incurvées et déformées en partie inférieure | stries droites et régulières |
| | 450 | stries incurvées et déformées | N. D. | N. D. |
| | 500 | N. D. | stries incurvées et déformées | stries incurvées |
| N.D.: non déterminé. | | | | |

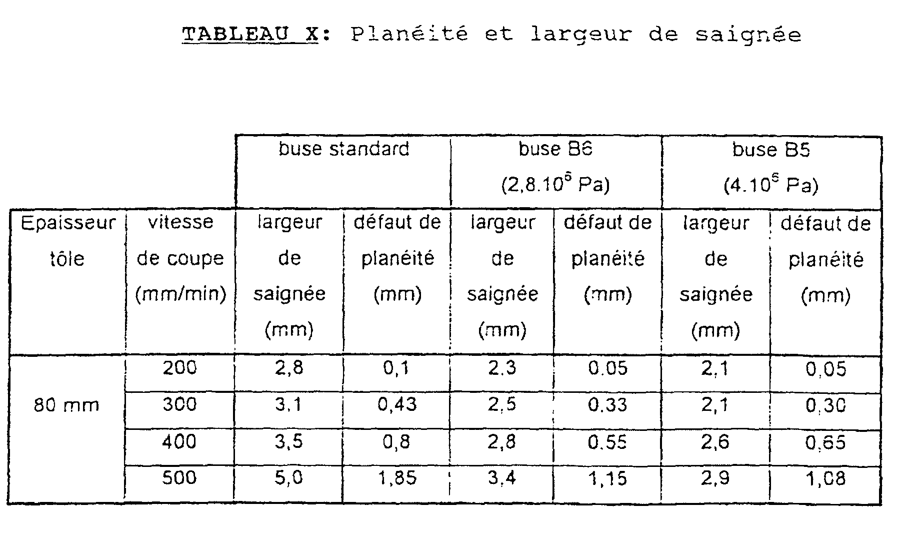

### EXEMPLE 2:

### Essais d'oxycoupage avec de l'oxygène de basse pureté

Une seconde série d'essais a été effectuée avec de l'oxygène basse pureté (oxygène pollué par 0,5% d'impuretés), de manière analogue à l'exemple 1.

Les résultats obtenus sont consignés ci-après.

### . Vitesses limites de coupe

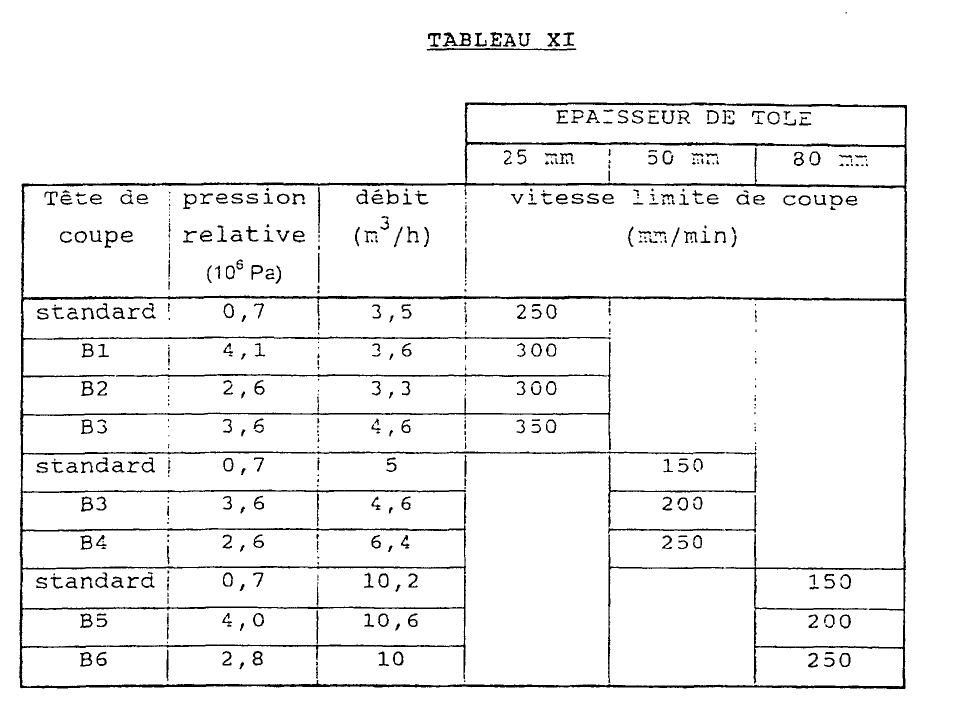

### . Etat d'oxydation

Comme dans l'exemple 1, les surfaces obtenues ne présentent pas de défaut d'oxydation.

### . Qualité de coupe

**TABLEAU XII:**

| Aspect des surfaces | | | | |
|---|---|---|---|---|
| Epaisseur tôle | vitesse de coupe (mm/min) | buse standard (7.10⁵ Pa) | buse B4 (26.10⁵ Pa) | buse B3 (36.10⁵ Pa) |
| 25 mm | 250 | stries inclinées (retard 3 mm) | stries inclinées (retard 1 mm) | stries inclinées (retard 1,5 mm) |
| | 300 | stries incurvées (retard 4 mm) | stries inclinées (retard 2 mm) | stries inclinées (retard 2 mm) |
| | 350 | / | stries incurvées (retard 3 mm) | stries incurvées (retard 3 mm) |

**TABLEAU XIII:**

| Planéité et largeur de saignée à 300 mm/min | | | |
|---|---|---|---|
| EPAISSEUR TOLE | BUSE | Largeur de saignée maximum (mm) | Planéité (mm) |
| 25 mm | standard | 2,4 | 0,5 |
| | buse B1 | 1,3 | 0,05 |
| | buse B2a | 1,8 | 0,3 |
| | buse B2b | 2,0 | 0,35 |
| | buse B3 | 1,8 | 0,2 |
| B2a = 26.10⁵ Pa B2b = 36.10⁵ Pa | | | |

**TABLEAU XIV:**

| Aspect des surfaces | | | | |
|---|---|---|---|---|
| Epaisseur tôle | vitesse de coupe (mm/min) | buse standard (7.10⁵ Pa) | buse B4 (26.10⁵ Pa)) | buse B3 (36.10⁵ Pa)) |
| 50 mm | 150 | stries inclinées (retard 3.5 mm) | stries droites | affouillements |
| | 200 | stries incurvées (retard 6 mm) | stries inclinées (retard 2 mm) | stries inclinées (retard 2.5 mm) |
| | 250 | / | stries inclinées (retard 2 mm) | stries inclinées (retard 3,5 mm) |

**TABLEAU XV:**

| Planéité et largeur de saignée à 200 mm/min | | | |
|---|---|---|---|
| EPAISSEUR TOLE | BUSE | Largeur de saignée maximum (mm) | Planéité (mm) |
| 50 mm | standard | 2,3 | 0,3 |
| | buse B3 | 2,6 | 0,75 |
| | buse B4 | 2,6 | 0,65 |

**TABLEAU XVI:**

| Aspect des surfaces | | | | |
|---|---|---|---|---|
| Epaisseur tôle | vitesse de coupe (mm/min) | buse standard 7.10⁵ Pa | buse B6 28.10⁵ Pa | buse B5 4.10⁶ Pa |
| | 150 | stries droites | stries incurvées vers l'avant en partie inférieure | affouillements en partie inférieure |
| 80 mm | 200 | stries inclinées | stries droites | stries droites |
| | 250 | | stries déformées | stries déformées |

**TABLEAU XVII:**

| Planéité et largeur de saignée à 200 mm/min | | | |
|---|---|---|---|
| EPAISSEUR TOLE | BUSE | Largeur de saignée maximum (mm) | Planéité (mm) |
| | standard | 3,8 | 0,7 |
| 80 mm | buse B5 | 2,7 | 0,4 |
| | buse B6 | 4,2 | 1,1 |

### Analyse des résultats des exemples 1 et 2

Il ressort des tableaux IV à XVII que les débits d'oxygène de coupe choisis semblent convenir aux épaisseurs à oxycouper. Toutefois, les surfaces obtenues sont dénuées d'oxydes, notamment dans le cas des tôles de 25 mm d'épaisseur, ce qui laisse supposer que la quantité d'oxygène apportée est à son minimum. On peut donc accroître le débit d'oxygène pour améliorer le procédé en terme de vitesse limite comme en témoignent les essais faits sur les épaisseurs de 25 mm et ce 50 mm.

Sous oxygène de haute pureté de type LASAL 2003, le gain est d'environ 30% sur la vitesse limite obtenue à pression standard (7.10⁵ Pa).

Ce gain atteint environ 60% pour une épaisseur de 50 nm et un accroissement du débit de 5 à 10 m³/h.

Sous oxygène basse pureté (98%), pour une épaisseur de 25 mm et un accroissement du débit de 3 à 5 m³/h, le gain est de 40%.

En outre, pour l'ensemble des essais, on observe une détérioration de la qualité avec l'augmentation de la vitesse de coupe et une diminution de la vitesse de coupe avec l'augmentation de l'épaisseur.

Il en découle que, toutes conditions confondues, les améliorations apportées par le procédé haute pression selon l'invention sont notamment une augmentation de la vitesse limite, une diminution du défaut de planéité et une diminution de la largeur de saignée.

Par ailleurs, avec de l'oxygène de haute pureté type LASAL 2003 et pour une épaisseur de tôle de 25 mm, la vitesse limite la plus importante correspond à une pression de 41.10⁵ Pa, alors que pour une épaisseur de 50 mm, les résultats les meilleurs sont ceux de la buse fonctionnant à 26.10⁵ Pa. En revanche, la vitesse limite est plus importante dans les deux cas de haute pression (28.10⁵ Pa et 40.10⁵ Pa) pour une épaisseur de tôle de 80 mm. Les gains approximatifs sont de 20% pour une épaisseur de tôle de 25 mm et de 40% pour les épaisseurs de 50 et de 80 mm.

De même, en oxygène basse pureté (98%), les vitesses limites sont équivalentes à 26.10⁵ Pa et 41.10⁵ Pa, pour une épaisseur de 25 mm, alors que pour les épaisseurs 50 et 80 mm, les vitesse limites les plus élevées sont obtenues, respectivement, à 26.10⁵ Pa et 28.10⁵ Pa.

Enfin, notons que le fait d'obtenir des surfaces dépourvues d'oxydes peut s'expliquer par la faible pureté de l'oxygène de coupe.

Il résulte des exemples 1 et 2 que les résultats obtenus sont tout à fait surprenants. En effet, ceux-ci laissent apparaître que l'influence de la haute pression est différente suivant l'épaisseur des tôles à oxycouper, la nature de l'oxygène et les têtes de coupes utilisées; En particulier, les buses B2 et B3 notamment donnent des résultats plutôt médiocres. Quoiqu'il en soit, les tendances observées montrent que la mise en oeuvre du procédé haute pression est susceptible d'améliorer l'opération d'oxycoupage.

Les buses fonctionnant à la pression la plus élevée et au débit minimum donnent les meilleurs résultats en ce qui concernent la qualité de la coupe. Cependant, de telles conditions limitent le gain sur la vitesse de coupe.

Compte tenu des qualités obtenues, on peut augmenter le débit en vue d'atteindre des vitesses de coupe supérieures. Dans ce cas, les surfaces présenteront plus d'oxydes du fait de l'excès d'oxygène de coupe et la largeur de saignée sera plus importante du fait de l'accroissement du calibre.

Le procédé haute pression associé à l'oxygène basse pureté (98%) n'atteint pas les performances du procédé haute pureté à pression standard.

En outre, au vu des essais de largeur de saignée, il apparaît clairement qu'à vitesse égale, la largeur de saignée est plus faible et les faces de coupe plus parallèles dans le cas du procédé haute pression selon l'invention que dans le cas d'un procédé classique à pression standard (photographie n° 1). Il est à noter que le défaut de planéité évolue selon un schéma usuel (photographie n° 2).

Le procédé selon l'invention combinant une haute pureté de l'oxygène de coupe à une haute pression de celui-ci permet, d'une part, de compenser le défaut de planéité propre des procédés uniquement à haute pureté et, d'autre part, d'accroître la vitesse de coupe. Bien que l'utilisation d'une haute pression en oxygène de coupe basse pureté (98%) améliore aussi les performances, celles-ci restent inférieures à celles du procédé haute pureté à pression standard.

En revanche, les vitesses atteintes de coupe sont proches des performances de l'oxycoupage sous oxygène standard (99,5%) et pression standard (6 à 8.10⁵ Pa).

Le procédé d'oxycoupage selon l'invention trouve des applications dans toutes les industries mettant en oeuvre l'oxycoupage, telles les industries offshore, de construction de véhicules industriels ou ferroviaires, la sidérurgie, la chaudronnerie, la construction métallique et analogues.

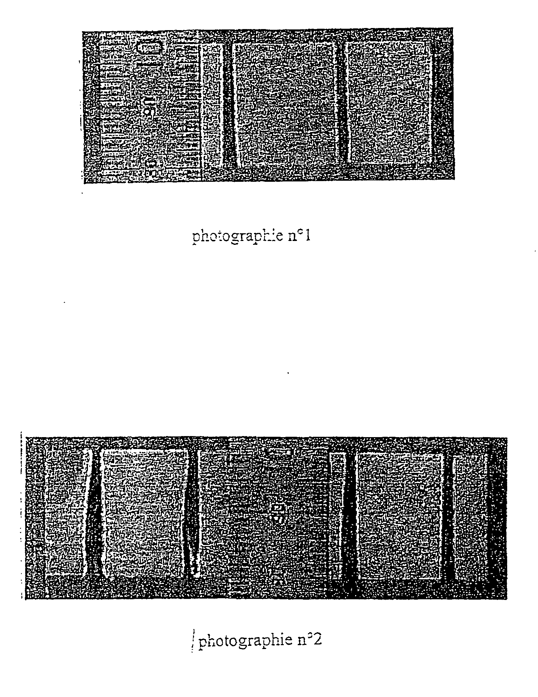

## Revendications

1. Procédé de oxycoupage des aciers et alliages d'aciers, dans lequel on utilise en tant que gaz de coupe de l'oxygène à une pression d'au moins 1,5.10⁶ Pa **caractérisé en ce que** l'oxygène contient au plus 0,1 % d'impuretés.

2. Procédé selon la revendication 1, **caractérisé en ce que** la pression de l'oxygène est comprise dans la plage 2,5.10⁶ Pa à 5,5.10⁶ Pa .

3. Procédé selon l'une des revendications 1 ou 2, **caractérisé en ce que** la pression de l'oxygène est d'environ 4.10⁶ Pa.

4. Procédé selon l'une des revendications 1 à 3, **caractérisé en ce que** la teneur en impuretés de l'oxygène est inférieure à 900 ppm, de préférence inférieure à 100 ppm.

5. Procédé selon l'une des revendications 1 à 4, **caractérisé en ce que** le débit d'oxygène est supérieur à 2 m³.h⁻¹.

6. Procédé selon l'une des revendications 1 à 5, **caractérisé en ce que** la vitesse de coupe est d'au plus 750 mm.min⁻¹.

7. Dispositif susceptible de mettre en oeuvre un procédé selon l'une des revendications 1 à 7, comprenant un chalumeau muni d'une tuyère à profil convergent/divergent, l'angle du divergent étant compris entre 5° et 7° et l'angle du convergent étant compris entre 45° et 60°, et le calibre de l'orifice de sortie étant compris entre 0,25 mm et 1 mm.

## Patentansprüche

1. Verfahren zum Brennschneiden von Stählen und Stahllegierungen, bei dem als Schneidgas Sauerstoff mit einem Druck von zumindest 1,5·10⁶ Pa verwendet wird, **dadurch gekennzeichnet, dass** der Sauerstoff höchstens 0,1% Verunreinigungen enthält.

2. Verfahren nach Anspruch 1, **dadurch gekennzeichnet, dass** der Sauerstoffdruck in dem Bereich zwischen 2.5·10⁶ Pa und 5.5·10⁶ Pa liegt.

3. Verfahren nach einem der Ansprüche 1 oder 2, **dadurch gekennzeichnet, dass** der Sauerstoffdruck etwa 4·10⁶ Pa beträgt.

4. Verfahren nach einem der Ansprüche 1 bis 3, **dadurch gekennzeichnet, dass** der Gehalt an Verunreinigungen des Sauerstoffs kleiner als 900 ppm, vorzugsweise kleiner als 100 ppm ist.

5. Verfahren nach einem der Ansprüche 1 bis 4, **dadurch gekennzeichnet, dass** der Sauerstoffdurchsatz größer als 2 m³·h⁻¹ ist.

6. Verfahren nach einem der Ansprüche 1 bis 5, **dadurch gekennzeichnet, dass** die Schnittgeschwindigkeit höchstens 750 mm·min⁻¹ beträgt.

7. Vorrichtung zur Durchführung eines Verfahrens nach einem der Ansprüche 1 bis 6 mit einem Schneidbrenner, der mit einer Düse mit konvergentem/divergentem Profil versehen ist, wobei der Winkel der Divergenz zwischen 5° und 7° und der Winkel der Konvergenz zwischen 45° und 60° liegt und die Größe der Austrittsöffnung zwischen 0,25 mm und 1 mm liegt.

## Claims

1. Process for oxycutting steels and steel alloys, in which oxygen at a pressure of at least 1.5 x 10⁶ Pa is used as cutting gas, **characterized in that** the oxygen contains at most 0.1% of impurities.

2. Process according to Claim 1, **characterized in that** the pressure of the oxygen lies in the range from 2.5 × 10⁶ Pa to 5.5 × 10⁶ Pa.

3. Process according to either of Claims 1 and 2, **characterized in that** the pressure of the oxygen is approximately 4 × 10⁶ Pa.

4. Process according to one of Claims 1 to 3, **characterized in that** the impurity content of the oxygen is less than 900 ppm and preferably less than 100 ppm.

5. Process according to one of Claims 1 to 4, **characterized in that** the oxygen flow rate is greater than 2 m³/h.

6. Process according to one of Claims 1 to 5, **characterized in that** the cutting speed is at most 750 mm/min.

7. Device capable of implementing a process according to one of Claims 1 to 6, comprising a torch provided with a nozzle having a convergent/divergent profile, the angle of the divergent part being between 5° and 7° and the angle of the convergent part being between 45° and 60°, and the bore of the outlet being between 0.25 mm and 1 mm.
